# EUROPEAN PATENT APPLICATION

(11) **EP 4 847 465 A1**
(43) Date of publication of application: **02.12.2026**
(21) Application number: 25222491.0
(22) Date of filing: 11.12.2025
(51) Int. Cl.: C03C 13/06, C03C 13/02

(54) **ALKALI-RESISTANT BASALT FIBER, PREPARATION METHOD THEREFOR AND USE THEREOF**

(30) Priority: 28.05.2025 CN 202510696730
(71) Applicant: Qinhuangdao Glass Industry Research and Design Institute Company Limited, Qinhuangdao, Hebei 066001 (CN)
(72) Inventor: XU, Xinru, Qinhuangdao, 066001 (CN); LIU, Shuofang, Qinhuangdao, 066001 (CN); XIA, Weimei, Qinhuangdao, 066001 (CN); CHEN, Zhaomin, Qinhuangdao, 066001 (CN); CHEN, Fu, Qinhuangdao, 066001 (CN)
(74) Representative: Bryn Aarflot AS

(57) **Abstract**

The present invention relates to the technical field of basalt fibers, and discloses an alkali-resistant basalt fiber and a preparation method therefor and use thereof. The basalt fiber has a chemical composition comprising: SiO₂ 40% to 70%, Al₂O₃ 4% to 11%, CaO+MgO 2% to 8%, Fe₂O₃+FeO 2% to 9%, K₂O+Na₂O 4% to 13%, TiO₂ 4% to 10%, ZrO₂ 2% to 9%, B₂O₃ 1% to 6%, MoO₂ 1% to 6% and Ta₂O₅+Nb₂O₅ 1% to 4%, by mass percentage. The basalt fiber of the present invention can keep relatively high stability under an alkaline condition, and the service life of the basalt fiber is prolonged.

## Description

### TECHNICAL FIELD

The present invention relates to the technical field of basalt fibers, specifically relates to an alkali-resistant basalt fiber and a preparation method therefor and use thereof.

### BACKGROUND

Basalt fiber is low-cost, high performance-to-price ratio, energy-saving and environmentally friendly in the production process, and non-toxic and harmless, and therefore hailed as a pollution-free "green material and advanced material" of the 21st century. Compared with glass fiber, basalt fiber has higher mechanical properties (high elastic modulus and high fracture strength), good insulation performance, excellent temperature resistance and thermal stability, strong radiation resistance and other excellent properties, making it widely used in national defense and military industry, transportation, construction, vehicle and ship manufacturing, petrochemical industry, environmental protection equipment, electronic information, aerospace and other fields. However, because natural basalt ore is used as the raw material, the resulting basalt fiber exhibits relatively limited properties. Under alkaline conditions, the Si element, Al element, and B element in the fiber material react with OH⁻ , causing fiber damage and reducing the physical and chemical properties of the fiber. Therefore, how to effectively improve the alkali resistance of basalt fiber is one of the key issues that the industry in this field needs to solve urgently.

To this end, the relevant technology discloses a method, a product and apparatus for manufacturing alkali-resistant basalt fiber. Although the method discloses that the tensile strength of the fiber can still be maintained at 800MPa or higher and the retention rate of the single fiber strength exceeds 75% after immersion in a saturated Ca(OH)₂ solution at 100°C for 4 hours. However, the total content of SiO₂ and Al₂O₃ is relatively high, so that alkali resistance is still unsatisfactory. Moreover, the raw material contains fluorite, which decomposes to produce fluorine-containing gas during the production process of the fiber, polluting the air and potentially harming the surrounding environment and living organisms. Another related technology discloses a formulation of alkali-resistant basalt fiber with a multi-mineral combination, comprising 40 to 60 parts by weight of basalt, 5 to 15 parts by weight of dolomite, 10 to 18 parts by weight of sepiolite, 6 to 8 parts by weight of zircon, 2 to 5 parts by weight of ilmenite, 5 to 10 parts by weight of celestite, 6 to 14 parts by weight of calcite, 3 to 9 parts by weight of diopside, 8 to 11 parts by weight of kaolin. After the resulting product is immersed in an alkaline solution for 28 days, the calculated SiO₂ loss rate of the fiber is still high.

Therefore, how to optimize and improve basalt fiber to enhance the alkali resistance of basalt fiber is one of the technical problems that urgently need to be solved in this field.

### SUMMARY OF THE INVENTION

In view of this, the present invention provides an alkali-resistant basalt fiber.

The present invention also provides a method for preparing the above-mentioned alkali-resistant basalt fiber.

In a first aspect, the present invention provides an alkali-resistant basalt fiber, by mass percentage, the basalt fiber has a chemical composition comprising: SiO₂ 40% to 70%, Al₂O₃ 4% to 11%, CaO+MgO 2% to 8%, Fe₂O₃+FeO 2% to 9%, K₂O+Na₂O 4% to 13%, TiO₂ 4% to 10%, ZrO₂ 2% to 9%, B₂O₃ 1% to 6%, MoO₂ 1% to 6% and Ta₂O₅+Nb₂O₅ 1% to 4%.

In an optional embodiment, the basalt fiber has a chemical composition comprising: SiO₂ 45% to 69%, Al₂O₃ 5% to 10%, CaO+MgO 4% to 6%, Fe₂O₃+FeO 3% to 6%, K₂O+Na₂O 5% to 9%, TiO₂ 6% to 7%, ZrO₂ 4% to 6%, B₂O₃ 2% to 4%, MoO₂ 1% to 4% and Ta₂O₅+Nb₂O₅ 1% to 3%.

In an optional embodiment, the basalt fiber has a chemical composition comprising: SiO₂ 54%, Al₂O₃ 10%, CaO+MgO 5%, Fe₂O₃+FeO 6%, K₂O+Na₂O 7%, TiO₂ 7%, ZrO₂ 5%, B₂O₃ 3%, MoO₂ 2% and Ta₂O₅+Nb₂O₅ 1%.

In an optional embodiment, the basalt fiber has a chemical composition comprising: SiO₂ 56%, Al₂O₃ 9%, CaO+MgO 4%, Fe₂O₃+FeO 4%, K₂O+Na₂O 6%, TiO₂ 6%, ZrO₂ 6%, B₂O₃ 4%, MoO₂ 3% and Ta₂O₅+Nb₂O₅ 2%.

In an optional embodiment, the basalt fiber has a chemical composition comprising: SiO₂ 59%, Al₂O₃ 5%, CaO+MgO 6%, Fe₂O₃+FeO 3%, K₂O+Na₂O 8%, TiO₂ 6%, ZrO₂ 4%, B₂O₃ 2%, MoO₂ 4% and Ta₂O₅+Nb₂O₅ 3%.

In a second aspect, the present invention provides a method for preparing the above-mentioned alkali-resistant basalt fiber, the method comprises the following steps:
(1) mixing and stirring the raw materials of the alkali-resistant basalt fiber to obtain a mixed material; and
(2) melting and drawing the mixed material sequentially to obtain the alkali-resistant basalt fiber;
the raw materials of the alkali-resistant basalt fiber comprise basalt, rutile, zircon, szaibelyite, potassium feldspar, molybdenite, and tantalum-niobium ore tailings.

In an optional embodiment, the melting is carried out at a temperature ranging from 1450°C to 1600°C.

In an optional embodiment, the drawing is carried out at a temperature ranging from 1320°C to 1450°C.

In an optional embodiment, in step (1), grinding and magnetic separation are performed in sequence before mixing and stirring.

In an optional embodiment, a mass ratio of the basalt, the rutile, the zircon, the szaibelyite, the potassium feldspar, the molybdenite, and the tantalum-niobium ore tailings is (60-100): (5-13): (5-15): (3-10): (3-40): (2-8): (20-50).

In a third aspect, the present invention provides use of the above-mentioned alkali-resistant basalt fiber in civil engineering and aerospace.

Compared with the prior art, the technical solution of the present invention has the following advantages:
1. The alkali-resistant basalt fiber provided by the present invention has a chemical composition comprising: SiO₂ 40% to 70%, Al₂O₃ 4% to 11%, CaO+MgO 2% to 8%, Fe₂O₃+FeO 2% to 9%, K₂O+Na₂O 4% to 13%, TiO₂ 4% to 10%, ZrO₂ 2% to 9%, B₂O₃ 1% to 6%, MoO₂ 1% to 6% and Ta₂O₅+Nb₂O₅ 1% to 4%, by mass percentage. The basalt fiber of the present invention can maintain a high stability under alkaline conditions and extend its service life. Specifically, the main component of potassium feldspar is potassium aluminum silicate, which is a common feldspar mineral, mainly providing potassium and silicate components. Potassium feldspar has a low melting point and a long melting time, which can improve the melting performance of basalt fiber raw materials and make it easier to draw into fiber. MgO, Na₂O, and CaO can fill and supplement the network structure inside the basalt fiber, which is beneficial to improve the alkali-corrosion resistance of fibers; The main component of rutile is TiO₂, which can improve the corrosion resistance and waterproof performance of basalt fiber. ZrO₂ can improve the alkaline-corrosion resistance of basalt fiber, and can also improve the heat-resistance of basalt fiber. The main components of szaibelyite include magnesium, boron and other elements, and szaibelyite is a common boron mineral. Szaibelyite is used to provide boron element, and the addition of boron element can improve the chemical stability of basalt fibers, making them exhibit good corrosion resistance in different chemical environments. Molybdenite is rich in molybdenum, which has excellent corrosion resistance. Adding molybdenite to basalt fiber is beneficial to enhance the corrosion resistance of basalt fiber under alkaline conditions. Tantalum-niobium ore tailings are rich in tantalum and niobium. Tantalum and niobium have strong corrosion resistance and high melting point. Adding tantalum-niobium ore tailings to basalt fiber is beneficial to enhance the adaptability of basalt fiber to corrosive environment and extend the service life of the fiber. At the same time, the addition of tantalum-niobium ore tailings is beneficial to improve the heat resistance and mechanical properties (tensile strength, elastic modulus) of basalt fiber, so that it can maintain excellent performance in extreme high temperature environment.
   Compared with conventional basalt fiber materials, the alkali-resistant basalt fiber provided by the present invention is lower in cost and longer in service life, and is suitable for use under extreme conditions.
2. The method for preparing the alkali-resistant basalt fiber of the present invention employs a simple raw material composition, a mature preparation process, and is readily scaled up for industrial production and widespread adoption.
3. The method for preparing the alkali-resistant basalt fiber of the present invention further includes grinding and magnetic separation treatment before the stirring and mixing step, thereby effectively removing impurities from the raw materials.

### DETAILED DESCRIPTION

The following examples are provided for a better understanding of the present application, are not limited to the preferred implementations, and do not constitute a limitation on the content or scope of protection of the present application. Any product identical or similar to the present application, derived by anyone under the inspiration of the present application or by combining the present application with other features of the prior art, falls within the scope of protection of the present application.

Where specific experimental steps or conditions are not indicated in the examples, the operations or conditions of conventional experimental steps described in the documents in the present art can be followed. The reagents or instruments used without the manufacturer indicated are conventional reagent products that are commercially available.

The present invention is further described below with reference to specific embodiments, which are not to be construed as limiting the scope of protection claimed by the present invention.

### Example 1

This example provided a method for preparing alkali-resistant basalt fiber. The method comprised the following steps:
(1) 79 parts by weight of basalt, 7 parts by weight of rutile, 10 parts by weight of zircon, 3 parts by weight of szaibelyite, 3 parts by weight of potassium feldspar, 3 parts by weight of molybdenite, and 20 parts by weight of tantalum-niobium ore tailings were weighed, and finely ground, subjected to a magnetic separation treatment, and then stirred and mixed to obtain a mixed material;
(2) the above-mentioned mixed material was melted in a high-temperature furnace at 1500°C to obtain a basalt fiber melt; and
(3) the basalt fiber melt was pulled and drawn through a platinum-rhodium alloy leak plate at 1320°C, wherein the resulting basalt fiber had a chemical composition comprising: SiO₂ 54%, Al₂O₃ 10%, CaO+MgO 5%, Fe₂O₃+FeO 6%, K₂O+Na₂O 7%, TiO₂ 7%, ZrO₂ 5%, B₂O₃ 3%, MoO₂ 2%, Ta₂O₅ +Nb₂O₅ 1%; and then, under the action of the impregnating agent, the basalt fiber was passed through a buncher, a fiber tensioner, and an automatic winding machine to finally form a package.

### Example 2

This example provided a method for preparing alkali-resistant basalt fiber. The method comprised the following steps:
(1) 82 parts by weight of basalt, 6 parts by weight of rutile, 8 parts by weight of zircon, 9 parts by weight of szaibelyite, 9 parts by weight of potassium feldspar, 4 parts by weight of molybdenite, and 40 parts by weight of tantalum-niobium ore tailings were weighed, and finely ground, subjected to a magnetic separation treatment, and then stirred and mixed to obtain a mixed material;
(2) the above-mentioned mixed material was melted in a high-temperature furnace at 1550°C to obtain a basalt fiber melt; and
(3) the basalt fiber melt was pulled and drawn through a platinum-rhodium alloy leak plate at 1380°C, wherein the resulting basalt fiber had a chemical composition comprising: SiO₂ 56%, Al₂O₃ 9%, CaO+MgO 4%, Fe₂O₃+FeO 6%, K₂O+Na₂O 6%, TiO₂ 6%, ZrO₂ 6%, B₂O₃ 4%, MoO₂ 3%, Ta₂O₅ +Nb₂O₅ 2%; and then, under the action of the impregnating agent, the basalt fiber was passed through a buncher, a fiber tensioner, and an automatic winding machine to finally form a package.

### Example 3

This example provided a method for preparing alkali-resistant basalt fiber. The method comprised the following steps:
(1) 84 parts by weight of basalt, 9 parts by weight of rutile, 8 parts by weight of zircon, 5 parts by weight of szaibelyite, 30 parts by weight of potassium feldspar, 8 parts by weight of molybdenite, and 30 parts by weight of tantalum-niobium ore tailings were weighed, and finely ground, subjected to a magnetic separation treatment, and then stirred and mixed to obtain a mixed material;
(2) the above-mentioned mixed material was melted in a high-temperature furnace at 1600°C to obtain a basalt fiber melt; and
(3) the basalt fiber melt was pulled and drawn through a platinum-rhodium alloy leak plate at 1450°C, wherein the resulting basalt fiber had a chemical composition comprising: SiO₂ 59%, Al₂O₃ 5%, CaO+MgO 6%, Fe₂O₃ +FeO 3%, K₂O+Na₂O 8%, TiO₂ 6%, ZrO₂ 4%, B₂O₃ 2%, MoO₂ 4%, Ta₂O₅ +Nb₂O₅ 3%; and then, under the action of the impregnating agent, the basalt fiber was passed through a buncher, a fiber tensioner, and an automatic winding machine to finally form a package.

### Example 4

This example provided a method for preparing alkali-resistant basalt fiber. The method comprised the following steps:
(1) 89 parts by weight of basalt, 7 parts by weight of rutile, 10 parts by weight of zircon, 3 parts by weight of szaibelyite, 40 parts by weight of potassium feldspar, 5 parts by weight of molybdenite, and 50 parts by weight of tantalum-niobium ore tailings were weighed, and finely ground, subjected to a magnetic separation treatment, and then stirred and mixed to obtain a mixed material;
(2) the above-mentioned mixed material was melted in a high-temperature furnace at 1450°C to obtain a basalt fiber melt; and
(3) the basalt fiber melt was pulled and drawn through a platinum-rhodium alloy leak plate at 1350°C, wherein the resulting basalt fiber had a chemical composition comprising: SiO₂ 60%, Al₂O₃ 11%, CaO+MgO 2%, Fe₂O₃+FeO 2%, K₂O+Na₂O 9%, TiO₂ 4%, ZrO₂ 2%, B₂O₃ 1%, MoO₂ 5%, Ta₂O₅ +Nb₂O₅ 4%; and then, under the action of the impregnating agent, the basalt fiber was passed through a buncher, a fiber tensioner, and an automatic winding machine to finally form a package.

### Example 5

This example provided a method for preparing alkali-resistant basalt fiber. The method comprised the following steps:
(1) 65 parts by weight of basalt, 5 parts by weight of rutile, 15 parts by weight of zircon, 10 parts by weight of szaibelyite, 20 parts by weight of potassium feldspar, 2 parts by weight of molybdenite, and 50 parts by weight of tantalum-niobium ore tailings were weighed, and finely ground, subjected to a magnetic separation treatment, and then stirred and mixed to obtain a mixed material;
(2) the above-mentioned mixed material was melted in a high-temperature furnace at 1600°C to obtain a basalt fiber melt; and
(3) the basalt fiber melt was pulled and drawn through a platinum-rhodium alloy leak plate at 1450°C, wherein the resulting basalt fiber had a chemical composition comprising: SiO₂ 47%, Al₂O₃ 4%, CaO+MgO 7%, Fe₂O₃+FeO 2%, K₂O+Na₂O 13%, TiO₂ 5%, ZrO₂ 7%, B₂O₃ 5%, MoO₂ 6%, Ta₂O₅ +Nb₂O₅ 4%; and then, under the action of the impregnating agent, the basalt fiber was passed through a buncher, a fiber tensioner, and an automatic winding machine to finally form a package.

### Example 6

This example provided a method for preparing alkali-resistant basalt fiber. The method comprised the following steps:
(1) 60 parts by weight of basalt, 10 parts by weight of rutile, 5 parts by weight of zircon, 3 parts by weight of szaibelyite, 17 parts by weight of potassium feldspar, 6 parts by weight of molybdenite, and 50 parts by weight of tantalum-niobium ore tailings were weighed, and finely ground, subjected to a magnetic separation treatment, and then stirred and mixed to obtain a mixed material;
(2) the above-mentioned mixed material was melted in a high-temperature furnace at 1580°C to obtain a basalt fiber melt; and
(3) the basalt fiber melt was pulled and drawn through a platinum-rhodium alloy leak plate at 1425°C, wherein the resulting basalt fiber had a chemical composition comprising: SiO₂ 41%, Al₂O₃ 11%, CaO+MgO 8%, Fe₂O₃+FeO 8%, K₂O+Na₂O 10%, TiO₂ 10%, ZrO₂ 2%, B₂O₃ 1%, MoO₂ 5%, Ta₂O₅ +Nb₂O₅ 4%; and then, under the action of the impregnating agent, the basalt fiber was passed through a buncher, a fiber tensioner, and an automatic winding machine to finally form a package.

### Comparative Example 1

The comparative example provided a method for preparing alkali-resistant basalt fiber, which was the same as the steps of Example 1, except that the raw material composition comprised: 80 parts by weight of basalt, 10 parts by weight of rutile, 10 parts by weight of zircon, 3 parts by weight of szaibelyite, 6 parts by weight of potassium feldspar, 4 parts by weight of molybdenite, and 41 parts by weight of tantalum-niobium ore tailings; the basalt fiber had a chemical composition comprising: SiO₂ 55%, Al₂O₃ 8%, CaO+MgO 3%, Fe₂O₃+FeO 5%, K₂O+Na₂O 4%, TiO₂ 10%, ZrO₂ 5%, B₂O₃ 1%, MoO₂ 4% and Ta₂O₅ +Nb₂O₅ 5%.

### Comparative Example 2

The comparative example provided a method for preparing alkali-resistant basalt fiber, which was the same as the steps of Example 1, except that the raw material composition comprised: 83 parts by weight of basalt, 6 parts by weight of rutile, 7 parts by weight of zircon, 9 parts by weight of szaibelyite, 28 parts by weight of potassium feldspar, 2 parts by weight of molybdenite, and 18 parts by weight of tantalum-niobium ore tailings; the basalt fiber had a chemical composition comprising: SiO₂ 57%, Al₂O₃ 10%, CaO+MgO 8%, Fe₂O₃+FeO 2%, K₂O+Na₂O 10%, TiO₂ 4%, ZrO₂ 3%, B₂O₃ 3%, MoO₂ 2.5% and Ta₂O₅ +Nb₂O₅ 0.5%.

### Comparative Example 3

The comparative example provided a method for preparing alkali-resistant basalt fiber, which was the same as the steps of Example 1, except that the raw material composition comprised: 80 parts by weight of basalt, 10 parts by weight of rutile, 9 parts by weight of zircon, 4 parts by weight of szaibelyite, 5 parts by weight of potassium feldspar, 11 parts by weight of molybdenite, and 22 parts by weight of tantalum-niobium ore tailings; the basalt fiber had a chemical composition comprising: SiO₂ 55%, Al₂O₃ 5%, CaO+MgO 2%, Fe₂O₃+FeO 3%, K₂O+Na₂O 4%, TiO₂ 9%, ZrO₂ 8%, B₂O₃ 6%, MoO₂ 7% and Ta₂O₅ +Nb₂O₅ 1%.

### Comparative Example 4

The comparative example provided a method for preparing alkali-resistant basalt fiber, which was the same as the steps of Example 1, except that the raw material composition comprised: 86 parts by weight of basalt, 9 parts by weight of rutile, 9 parts by weight of zircon, 4 parts by weight of szaibelyite, 4 parts by weight of potassium feldspar, 1 part by weight of molybdenite, and 28 parts by weight of tantalum-niobium ore tailings; the basalt fiber had a chemical composition comprising: SiO₂ 59%, Al₂O₃ 5%, CaO+MgO 2%, Fe₂O₃+FeO 2%, K₂O+Na₂O 4%, TiO₂ 9%, ZrO₂ 9%, B₂O₃ 6%, MoO₂ 0.5% and Ta₂O₅ +Nb₂O₅ 3.5%.

### Experimental Example 1

The basalt fibers prepared in the examples and comparative examples were cut into samples of uniform size and evenly divided into four groups, respectively placed in 0.1 mol/L NaOH solution and 1 mol/L NaOH solution. After standing for 12 hours, 24 hours, and 36 hours, the loss rate of each sample was calculated.

Under alkaline environmental conditions, the following reactions occur on the surface of basalt fiber samples:

[*-S*i*-O-Si-*]*+OH⁻* → [-*Si-OH*]*+*[*-SiO*]⁻

[-*Al-O-Al-*]*+OH⁻* → [*-AlO*]*⁻ +*[*-A*l*-OH*]

According to the following formula, the loss rate of basalt fiber in NaOH solutions of different concentrations was calculated. The results were shown in Table 1: $η = \frac{{m}_{1} - {m}_{2}}{{m}_{1}}$

Where, m₁ is the mass of basalt fiber before corrosion, and m₂ is the mass of basalt fiber after corrosion.

**Table 1 Loss rate of basalt fiber in examples and comparative examples in NaOH solutions of different concentrations (%)**

| | Concentration of NaOH mol/L | 12h | 24h | 36h |
|---|---|---|---|---|
| Example 1 | 0.1 | 3.21 | 3.49 | 3.86 |
| | 1 | 4.50 | 4.75 | 4.93 |
| Example 2 | 0.1 | 3.04 | 3.33 | 3.81 |
| | 1 | 4.39 | 4.71 | 4.88 |
| Example 3 | 0.1 | 3.11 | 3.60 | 3.76 |
| | 1 | 4.28 | 4.66 | 4.79 |
| Example 4 | 0.1 | 3.49 | 3.99 | 4.21 |
| | 1 | 4.68 | 4.98 | 5.15 |
| Example 5 | 0.1 | 3.37 | 3.73 | 3.97 |
| | 1 | 4.96 | 5.07 | 5.52 |
| Example 6 | 0.1 | 3.96 | 4.53 | 4.97 |
| | 1 | 5.23 | 5.58 | 5.83 |
| Comparative Example 1 | 0.1 | 6.79 | 8.11 | 8.99 |
| | 1 | 7.69 | 8.73 | 9.56 |
| Comparative Example 2 | 0.1 | 8.78 | 9.45 | 10.21 |
| | 1 | 9.64 | 10.34 | 11.02 |
| Comparative Example 3 | 0.1 | 8.25 | 9.19 | 9.93 |
| | 1 | 9.76 | 10.29 | 11.32 |
| Comparative Example 4 | 0.1 | 9.25 | 10.19 | 10.93 |
| | 1 | 10.76 | 11.29 | 12.32 |

It can be seen from the above table that the loss rate of the basalt fibers prepared in Examples 1 to 6 is 3.04% to 5.23% in 12 hours, 3.33% to 5.58% in 24 hours, and 3.76% to 5.83% in 36 hours. In the basalt fibers prepared in Comparative Example 1, the content of Ta₂O₅ +Nb₂O₅ is too high, which destroys the silicon-oxygen tetrahedral structure in the basalt fibers, causes the silicate network to break, and reduces its alkali resistance. In the basalt fibers prepared in Comparative Example 2, the content of Ta₂O₅ +Nb₂O₅ is too low to significantly change the alkali resistance of the basalt fiber. In the basalt fiber prepared in Comparative Example 3, the content of MoO₂ is too high, which destroys the network structure of the basalt fiber, accelerates the erosion in the alkaline solution, and leads to an increase in the mass loss of the basalt fiber. n the basalt fiber prepared in Comparative Example 4, the content of MoO₂ is relatively low, and the performance of the basalt fiber is not significantly changed. Due to poor alkali resistance of the basalt fiber prepared in Comparative Example 4, it has a large mass loss rate in the alkaline solution.

Obviously, the above examples are merely examples made for clear description, rather limiting the implementations. For those skilled in the art, other different forms of variations or modifications can also be made on the basis of the above-mentioned description. All embodiments are not necessary to be and cannot be exhaustively listed herein. In addition, obvious variations or modifications derived therefrom all fall within the scope of protection of the present invention.

## Claims

1. An alkali-resistant basalt fiber, **characterized in that**, by mass percentage, the basalt fiber has a chemical composition comprising: SiO₂ 40% to 70%, Al₂O₃ 4% to 11%, CaO+MgO 2% to 8%, Fe₂O₃+FeO 2% to 9%, K₂O+Na₂O 4% to 13%, TiO₂ 4% to 10%, ZrO₂ 2% to 9%, B₂O₃ 1% to 6%, MoO₂ 1% to 6% and Ta₂O₅+Nb₂O₅ 1% to 4%.

2. The alkali-resistant basalt fiber according to claim 1, **characterized in that** the basalt fiber has a chemical composition comprising: SiO₂ 45% to 69%, Al₂O₃ 5% to 10%, CaO+MgO 4% to 6%, Fe₂O₃+FeO 3% to 6%, K₂O+Na₂O 5% to 9%, TiO₂ 6% to 7%, ZrO₂ 4% to 6%, B₂O₃ 2% to 4%, MoO₂ 1% to 4% and Ta₂O₅+Nb₂O₅ 1% to 3%.

3. The alkali-resistant basalt fiber according to claim 1 or claim 2, **characterized in that** the basalt fiber has a chemical composition comprising: SiO₂ 54%, Al₂O₃ 10%, CaO+MgO 5%, Fe₂O₃+FeO 6%, K₂O+Na₂O 7%, TiO₂ 7%, ZrO₂ 5%, B₂O₃ 3%, MoO₂ 2% and Ta₂O₅+Nb₂O₅ 1%.

4. The alkali-resistant basalt fiber according to claim 1 or claim 2, **characterized in that** the basalt fiber has a chemical composition comprising: SiO₂ 56%, Al₂O₃ 9%, CaO+MgO 4%, Fe₂O₃+FeO 4%, K₂O+Na₂O 6%, TiO₂ 6%, ZrO₂ 6%, B₂O₃ 4%, MoO₂ 3% and Ta₂O₅+Nb₂O₅ 2%.

5. The alkali-resistant basalt fiber according to claim 1 or claim 2, **characterized in that** the basalt fiber has a chemical composition comprising: SiO₂ 59%, Al₂O₃ 5%, CaO+MgO 6%, Fe₂O₃+FeO 3%, K₂O+Na₂O 8%, TiO₂ 6%, ZrO₂ 4%, B₂O₃ 2%, MoO₂ 4% and Ta₂O₅+Nb₂O₅ 3%.

6. A method for preparing the alkali-resistant basalt fiber according to any one of claims 1 to 5, **characterized in that** the method comprises the following steps:
(1) mixing and stirring the raw materials of the alkali-resistant basalt fiber to obtain a mixed material; and
(2) melting and drawing the mixed material sequentially to obtain the alkali-resistant basalt fiber;
the raw materials of the alkali-resistant basalt fiber comprise basalt, rutile, zircon, szaibelyite, potassium feldspar, molybdenite, and tantalum-niobium ore tailings.

7. The method for preparing alkali-resistant basalt fiber according to claim 6, **characterized in that** the melting is carried out at a temperature ranging from 1450°C to 1600°C;
and/or, the drawing is carried out at a temperature ranging from 1320°C to 1450°C.

8. The method for preparing alkali-resistant basalt fiber according to claim 6 or claim 7, **characterized in that** in step (1), grinding and magnetic separation are performed in sequence before mixing and stirring.

9. The method for preparing the alkali-resistant basalt fiber according to claim 6 or claim 7, **characterized in that** a mass ratio of the basalt, the rutile, the zircon, the szaibelyite, the potassium feldspar, the molybdenite, and the tantalum-niobium ore tailings is (60-100): (5-13): (5-15): (3-10): (3-40): (2-8): (20-50).

10. Use of the alkali-resistant basalt fiber according to any one of claims 1 to 5 or the alkali-resistant basalt
fiber prepared by the method according to any one of claims 6 to 9 in civil engineering and aerospace.
